# EUROPEAN PATENT APPLICATION

(11) **EP 3 957 912 A1**
(43) Date of publication of application: **23.02.2022**
(21) Application number: 20791320.3
(22) Date of filing: 23.03.2020
(51) Int. Cl.: F23G 5/50

(54) **INCINERATION SYSTEM COMPRISING STOKER-TYPE INCINERATOR**

(30) Priority: 16.04.2019 JP 2019077619
(71) Applicant: Ebara Environmental Plant Co., Ltd., Tokyo 144-0042 (JP)
(72) Inventor: IHARA, Takayuki, Tokyo 144-0042 (JP); KAWAGISHI, Takayoshi, Tokyo 144-0042 (JP)
(74) Representative: Carstens, Dirk Wilhelm
(86) International application number: PCT/JP2020/012699
(87) International publication number: WO 2020/213349

(57) **Abstract**

The present invention relates to an incineration system having an incinerator for incinerating waste, and more particularly to a technique for controlling a supply amount of a mercury adsorbent for removing mercury contained in an exhaust gas discharged from a stoker-type incinerator. The incineration system includes a stoker-type incinerator (1) having a drying zone (5) configured to dry the waste (2), a combustion zone (6) configured to burn the waste (2), and a post-combustion zone (7) configured to burn the unburned waste (2), at least one ultraviolet light sensor (100) configured to detect a concentration of mercury in the stoker-type incinerator (1), a supply device (55) configured to supply a mercury removing agent in an exhaust gas discharged from the stoker-type incinerator (1), and an operation controller (80) configured to instruct the supply device (55) to control the supply amount of the mercury removing agent based on an output signal of the ultraviolet light sensor (100).

## Description

### Technical Field

The present invention relates to an incineration system having an incinerator for incinerating waste, and more particularly to a technique for controlling a supply amount of a mercury adsorbent for removing mercury contained in an exhaust gas discharged from a stoker-type incinerator.

### Background Art

A stoker-type incinerator is an incinerator configured to burn waste on a stoker while moving the waste on the stoker. The waste may contain mercury, which is vaporized and partly oxidized with the combustion of the waste, and the mercury is discharged from the stoker-type incinerator along with an exhaust gas. Therefore, the mercury is removed by injecting a mercury removing agent (e.g., activated carbon) into the exhaust gas downstream of the stoker-type incinerator.

There is a method of supplying a constant amount of mercury removing agent without detecting a mercury concentration. However, this method is inefficient because a large amount of the mercury removing agent is used more than necessary in preparation for a large amount of mercury being discharged. Therefore, in order to reduce an amount of the mercury removing agent used, the mercury concentration is measured at a position upstream of a filtration-type dust collector (e.g., at an outlet or inside of the stoker-type incinerator) or at the outlet of the filtration-type dust collector, so that the mercury removing agent is supplied in accordance with the mercury concentration measured (see, for example, Patent Documents 1, 2 and 3).

### Citation List

### Patent Literature

Patent document 1: Japanese laid-open patent publication No. 2017-205761
Patent document 2: Japanese Patent No. 6016205
Patent document 3: Japanese Patent No. 6070971

### Summary of Invention

### Technical Problem

In the method of measuring the mercury concentration upstream of the general filtration-type dust collector or in the incinerator, a high temperature sample gas is extracted and the mercury concentration in the sample gas is measured. However, the sampling tube may be clogged with dust or moisture contained in the sample gas, making it difficult to measure the mercury concentration. Further, in this method, since a part of the exhaust gas is extracted, the measured value obtained may not reflect average of the mercury concentration in the entire incinerator when the gas flow in the incinerator is not uniform, and an appropriate amount of mercury removing agent may not be supplied. In addition, since the sampling method involves a time lag, a detection speed of the mercury concentration is slow and a control delay may occur.

Therefore, the present invention provides an incineration system capable of accurately and instantly detecting a concentration of mercury present in a stoker-type incinerator, and capable of appropriately controlling a supply amount of mercury removing agent.

### Solution to Problem

In one embodiment, there is provided an incineration system comprising: a stoker-type incinerator having a drying zone configured to dry a waste, a combustion zone configured to burn the dried waste, and a post-combustion zone configured to burn a remaining unburned waste; at least one ultraviolet light sensor configured to detect concentration of mercury in the stoker-type incinerator; a supply device configured to supply a mercury removing agent into an exhaust gas discharged from the stoker-type incinerator; and an operation controller configured to instruct the supply device to control a supply amount of the mercury removing agent based on an output signal of the ultraviolet light sensor.

In one embodiment, the ultraviolet light sensor is arranged above the drying zone.

In one embodiment, the at least one ultraviolet light sensor comprises a plurality of ultraviolet light sensors arranged along a moving direction of the waste in the stoker-type incinerator.

In one embodiment, the plurality of ultraviolet light sensors are fixed to a side wall of the stoker-type incinerator.

In one embodiment, the plurality of ultraviolet light sensors include at least one upstream ultraviolet light sensor arranged above the drying zone, and at least one downstream ultraviolet light sensor arranged above the combustion zone.

In one embodiment, the operation controller is configured to instruct the supply device to increase the supply amount of the mercury removing agent, when a numerical value of the output signal of the ultraviolet light sensor exceeds a threshold value.

In one embodiment, the operation controller is configured to instruct the supply device to supply the mercury removing agent into the exhaust gas with a first supply amount, when the numerical value of the output signal of the ultraviolet light sensor is equal to or less than the threshold value, and instruct the supply device to supply the mercury removing agent to the exhaust gas with a second supply amount larger than the first supply amount, when the numerical value of the output signal of the ultraviolet light sensor exceeds the threshold value.

In one embodiment, the incineration system further comprises: a filtration-type dust collector arranged downstream of the stoker-type incinerator; and a mercury concentration meter arranged downstream of the filtration-type dust collector, wherein the supply device is configured to continue to supply the mercury removing agent with the second supply amount until a mercury concentration value indicated by the mercury concentration meter becomes equal to or less than a set value.

### Advantageous Effects of Invention

The ultraviolet light sensor can instantly detect the concentration of the mercury present in the flame by detecting ultraviolet rays generated when mercury is vaporized and partially oxidized. The operation controller can quickly operate the supply device in accordance with the concentration of the mercury in the stoker-type incinerator to thereby supply an optimum amount of the mercury removing agent into the exhaust gas.

### Brief Description of Drawings

[FIG. 1] FIG. 1 is a diagram showing an embodiment of an incineration system having a stoker-type incinerator;
[FIG. 2] FIG. 2 is a diagram showing another embodiment of the incineration system;
[FIG. 3] FIG. 3 is a diagram showing another embodiment of the incineration system; and
[FIG. 4] FIG. 4 is a diagram showing yet another embodiment of the incineration system.

### Description of Embodiments

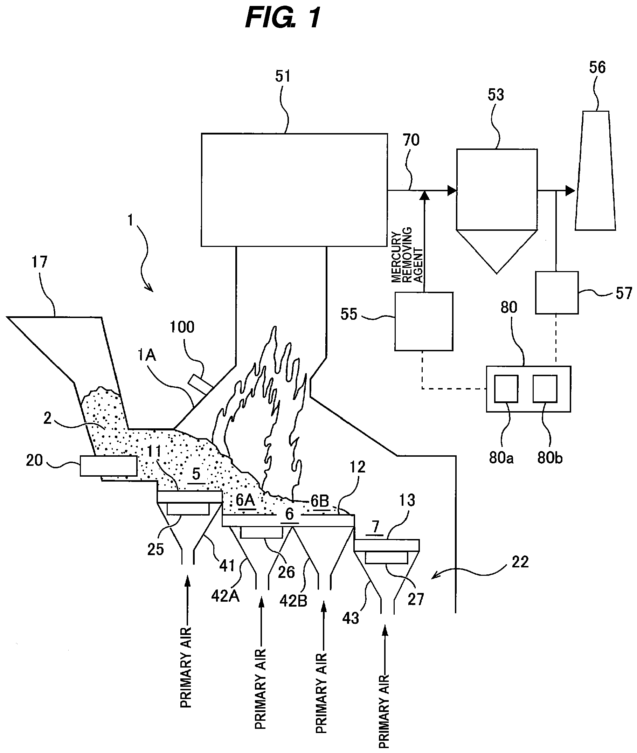

Embodiments will be described with reference to the drawings. FIG. 1 is a diagram showing an embodiment of an incineration system. The incineration system includes a stoker-type incinerator 1 for incinerating waste 2. The stoker-type incinerator 1 includes three zones: a drying zone 5 configured to dry the waste 2; a combustion zone 6 configured to burn the dried waste 2; and a post-combustion zone 7 configured to burn a remaining unburned waste 2. The waste 2 is transported to the drying zone 5, the combustion zone 6, and the post-combustion zone 7 successively in this order.

The stoker-type incinerator 1 includes a drying stoker 11 disposed in the drying zone 5, a combustion stoker 12 disposed in the combustion zone 6, and a post-combustion stoker 13 disposed in the post-combustion zone 7. The drying stoker 11, the combustion stoker 12, and the post-combustion stoker 13 are arranged in the order of the drying stoker 11, the combustion stoker 12, and the post-combustion stoker 13 along a moving direction of the waste 2 in the stoker-type incinerator 1. In this embodiment, the combustion zone 6 is divided into a first combustion zone 6A located at an upstream side in the moving direction of the waste 2, and a second combustion zone 6B located at a downstream side in the moving direction of the waste 2.

The stoker-type incinerator 1 includes a hopper 17 into which the waste 2 is introduced, and a waste feeding device 20 configured to transfer the waste 2, introduced in the hopper 17, to the drying zone 5. The waste feeding device 20 is disposed below the hopper 17. An amount of the waste 2 fed to the drying zone 5 can be regulated by the waste feeding device 20. The waste 2 that has been fed to the drying zone 5 is moved toward an ash chute 22 by operations of movable fire grates (not shown) of each of the drying stoker 11, the combustion stoker 12, and the post-combustion stoker 13.

A drying-stoker driving device 25 for driving the drying stoker 11 is disposed below the drying stoker 11. This drying-stoker driving device 25 is coupled to movable fire grates (not shown) constituting the drying stoker 11, and is configured to move the waste 2 on the drying stoker 11 to the downstream side by moving the movable fire grates relative to fixed fire grates (not shown).

A combustion-stoker driving device 26 for driving the combustion stoker 12 is disposed below the combustion stoker 12. This combustion-stoker driving device 26 is coupled to movable fire grates (not shown) constituting the combustion stoker 12, and is configured to move the waste 2 on the combustion stoker 12 to the downstream side by moving the movable fire grates relative to fixed fire grates (not shown).

A post-combustion-stoker driving device 27 for driving the post-combustion stoker 13 is disposed below the post-combustion stoker 13. This post-combustion-stoker driving device 27 is coupled to movable fire grates (not shown) constituting the post-combustion stoker 13, and is configured to move the waste 2 on the post-combustion stoker 13 to the downstream side by moving the movable fire grates relative to fixed fire grates (not shown).

Moving speeds of the waste 2 on the stokers 11, 12, and 13 of the three zones 5, 6, and 7 can be regulated by the above-described stoker driving devices 25, 26, and 27, respectively.

A drying air box 41 is disposed below the drying stoker 11. A first combustion air box 42A and a second combustion air box 42B are disposed below the combustion stoker 12. A post-combustion air box 43 is disposed below the post-combustion stoker 13. The arrangement of the first combustion air box 42A and the second combustion air box 42B corresponds to the arrangement of the first combustion zone 6A and the second combustion zone 6B.

Primary air, which is air for combustion, is delivered to the drying air box 41, the first combustion air box 42A, the second combustion air box 42B, and the post-combustion air box 43. The primary air is further supplied to the drying stoker 11, the combustion stoker 12, and the post-combustion stoker 13 from below, and is used for the combustion of the waste 2 existing on the stokers 11, 12, and 13.

In the embodiment shown in FIG. 1, the two combustion air boxes 42A and 42B are provided in the combustion zone 6, while in one embodiment, a single combustion air box may be provided. In this case, the combustion zone 6 is not divided into the first combustion zone 6A and the second combustion zone 6B.

The incineration system includes a boiler 51 coupled to the downstream side of the stoker-type incinerator 1, a filtration-type dust collector 53 coupled to the downstream side of the boiler 51, a supply device 55 configured to supply a mercury removing agent into an exhaust gas, and a chimney 56 coupled to the downstream side of the filtration-type dust collector 53. The incineration system further includes a mercury concentration meter 57 disposed downstream of the filtration-type dust collector 53. The mercury concentration meter 57 may be a general dry-reduction-type automatic meter, etc. The exhaust gas (combustion exhaust gas) discharged from the stoker-type incinerator 1 flows through the boiler 51 and the filtration-type dust collector 53, and is released into the atmosphere from the chimney 56.

The boiler 51 is a device configured to evaporate water to generate steam by using waste heat of the exhaust gas. The temperature of the exhaust gas is lowered by heat exchange with the water. The filtration-type dust collector 53 is a device configured to capture dust (fly ash) in the exhaust gas, and may be also referred to as a bag filter.

The boiler 51 communicates with the filtration-type dust collector 53 through a communication passage 70, and the supply device 55 is coupled to the communication passage 70. The exhaust gas flows from the boiler 51 to the filtration-type dust collector 53 through the communication passage 70. The supply device 55 is configured to supply the mercury removing agent into the exhaust gas flowing through the communication passage 70. The mercury removing agent used in this embodiment is a mercury adsorption removing agent containing activated carbon capable of adsorbing the mercury in the exhaust gas. The mercury in the exhaust gas is adsorbed and removed by the mercury removing agent and reduced below a predetermined value.

The incineration system further includes an ultraviolet light sensor 100 configured to measure a concentration of mercury existing in the stoker-type incinerator 1, and an operation controller 80 configured to control an operation of the supply device 55 based on an output signal of the ultraviolet light sensor 100. The operation controller 80 includes a memory 80a storing programs therein, and an arithmetic device 80b configured to perform arithmetic operations according to instructions contained in the programs. The arithmetic device 80b includes a CPU (central processing unit) or a GPU (graphic processing unit) or the like, configured to perform arithmetic operations according to the instructions contained in the programs. The memory 80a includes a main memory (e.g., a random-access memory) to which arithmetic device 80b is accessible, and an auxiliary memory (e.g., a hard disk drive or a solid-state drive) configured to store data and the programs.

The ultraviolet light sensor 100 is a forward ultraviolet light sensor configured to detect the concentration of the mercury present in the flame from a front of the flame. In this embodiment, the ultraviolet light sensor 100 is located above the drying stoker 11 of the stoker-type incinerator 1 (i.e., above the drying zone 5), and is fixed to a ceiling wall 1A of the stoker-type incinerator 1. The ceiling wall 1A is provided with a window (not shown) made of quartz glass or the like, so that the ultraviolet light sensor 100 can instantly detect the concentration of the mercury present in the flame in the stoker-type incinerator 1 through the window. The ultraviolet light sensor 100 is oriented in a direction from a position above the drying zone 5 toward the post-combustion zone 7. More specifically, the ultraviolet light sensor 100 is oriented in the moving direction of the waste 2 in the stoker-type incinerator 1. The waste 2 in the stoker-type incinerator 1 is moved in the order of the drying zone 5, the combustion zone 6, and the post-combustion zone 7.

The ultraviolet light sensor 100 detects ultraviolet rays generated when the mercury contained in the waste in the stoker-type incinerator 1 is vaporized and partially oxidized. The ultraviolet light sensor 100 generates the output signal indicating intensity of the ultraviolet rays (or an amount of the ultraviolet rays). The ultraviolet light sensor 100 is configured to detect ultraviolet rays in a wavelength range of 185 nm to 400 nm (preferably 185 nm to 260 nm) in order to detect the ultraviolet rays derived from the mercury contained in the waste. A numerical value indicated by the output signal of the ultraviolet light sensor 100 varies in accordance with the concentration of the mercury present in the flame in the stoker-type incinerator 1. The concentration of the mercury corresponds to an amount of mercury that has been vaporized and partially oxidized with the combustion of the waste. The ultraviolet light sensor 100 is electrically connected to the operation controller 80, and the output signal of the ultraviolet light sensor 100 is transmitted to the operation controller 80. The operation controller 80 instructs the supply device 55 to control a supply amount of the mercury removing agent based on the output signal of the ultraviolet light sensor 100.

The ultraviolet light sensor 100 can directly detect the concentration of the mercury present in the flame. In contrast, a conventional sampling-type mercury concentration measuring system extracts a part of the exhaust gas from the incinerator, and measures the concentration of the mercury contained in the exhaust gas, thus entailing a time lag. According to this embodiment, the operation controller 80 can quickly operate the supply device 55 in accordance with the concentration of the mercury in the stoker-type incinerator 1 to supply an optimum amount of the mercury removing agent into the exhaust gas. It is possible to use a laser-type analyzer, having a light emitting unit and a light receiving unit, for the mercury detection. However, the light emitting unit and the light receiving unit must be aligned in the incinerator, and therefore there are restrictions on their arrangements. In contrast, the ultraviolet light sensor can detect the concentration of the mercury in the incinerator in any position.

Most of the mercury contained in the waste 2 is expected to be vaporized in the drying zone 5. Therefore, the ultraviolet light sensor 100, disposed above the drying zone 5, can quickly detect the ultraviolet rays emitted from the mercury contained in the waste 2 present in the drying zone 5. The operation controller 80 performs a feedforward control to adjust the amount of the mercury removing agent to be supplied downstream of the stoker-type incinerator 1 based on the output signal of the ultraviolet light sensor 100 (i.e., the numerical value including an amount of the ultraviolet rays in the drying zone 5).

In this embodiment, the operation controller 80 is configured to instruct the supply device 55 to increase the supply amount of the mercury removing agent when the numerical value of the output signal of the ultraviolet light sensor 100 (i.e., the concentration of the mercury in the stoker-type incinerator 1) exceeds a threshold value. More specifically, the operation controller 80 is configured to instruct the supply device 55 to supply the mercury removing agent into the exhaust gas with a first supply amount when the numerical value of the output signal of the ultraviolet light sensor is not more than the threshold value, and instruct the supply device 55 to supply the mercury removing agent into the exhaust gas with a second supply amount, which is larger than the first supply amount, when the numerical value of the output signal of the ultraviolet light sensor exceeds the threshold value. The supply device 55 continues to supply the mercury removing agent with the second supply amount until the mercury concentration value indicated by the mercury concentration meter 57 disposed downstream of the filtration-type dust collector 53 becomes equal to or less than a set value. Such operation allows the supply device 55 to supply a minimum necessary amount of the mercury removing agent into the exhaust gas to thereby remove the mercury from the exhaust gas. In one embodiment, the operation controller 80 may instruct the supply device 55 to continuously change the supply amount of the mercury removing agent in accordance with the numerical value of the output signal of the ultraviolet light sensor.

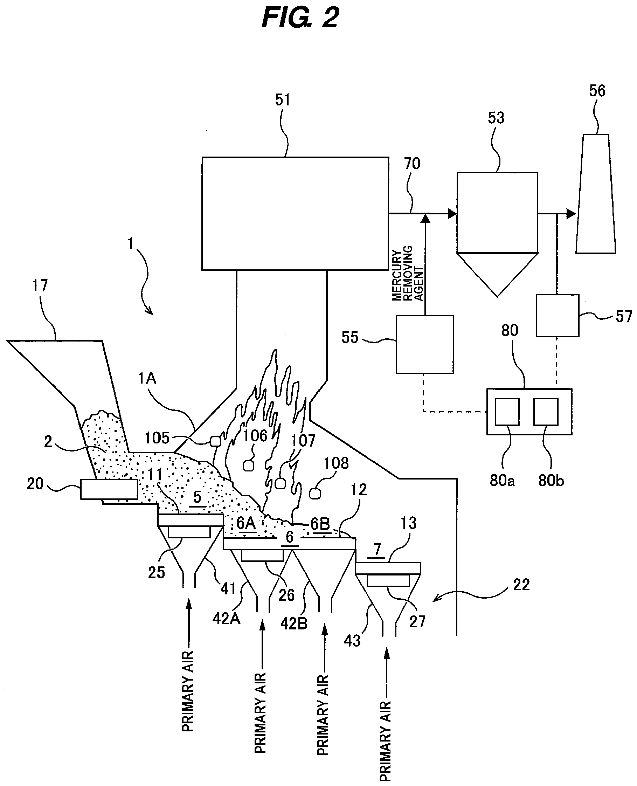

FIG. 2 is a diagram showing another embodiment of the incineration system having the stoker-type incinerator 1. Configurations and operations of this embodiment, which will not be particularly described, are the same as those of the embodiments described with reference to FIG. 1, and duplicated descriptions will be omitted.

In this embodiment, a plurality of ultraviolet light sensors 105, 106, 107, and 108 are provided. These ultraviolet light sensors 105, 106, 107, and 108 are lateral ultraviolet light sensors fixed to a side wall (not shown) of the stoker-type incinerator 1, and each ultraviolet light sensor is configured to detect, at the side of the flame, the concentration of the mercury present in the flame. Similar to the embodiment shown in FIG. 1, the side wall of the stoker-type incinerator 1 is provided with a plurality of windows (not shown) made of quartz glass or the like, and the ultraviolet light sensors 105, 106, 107, and 108 are arranged so as to detect the concentration of the mercury present in the flame in the stoker-type incinerator 1 through the windows.

As shown in FIG. 2, the ultraviolet light sensors 105, 106, 107, and 108 are arranged along the moving direction of the waste 2 in the stoker-type incinerator 1. Each of these ultraviolet light sensors 105, 106, 107, and 108 is oriented in a direction perpendicular to the moving direction of the waste 2 in the stoker-type incinerator 1. The ultraviolet light sensors 105, 106, 107, and 108 are located above the drying zone 5 and the combustion zone 6 (i.e., above the drying stoker 11 and the combustion stoker 12). The ultraviolet light sensors 105, 106, 107, and 108 include upstream ultraviolet light sensors 105 and 106 arranged at the upstream side in the moving direction of the waste 2, and downstream ultraviolet light sensors 107 and 108 arranged at the downstream side in the moving direction of the waste 2.

The first upstream ultraviolet light sensor 105 is arranged above the drying zone 5, and the second upstream ultraviolet light sensor 106 is arranged above the first combustion zone 6A. The two downstream ultraviolet light sensors 107 and 108 are arranged above the combustion zone 6. More specifically, the first downstream ultraviolet light sensor 107 is arranged above the first combustion zone 6A, and the second downstream ultraviolet light sensor 108 is arranged above the second combustion zone 6B.

According to the embodiment shown in FIG. 2, the multiple ultraviolet light sensors 105, 106, 107, and 108 can detect the ultraviolet rays emitted from the mercury vaporized in the combustion zone 6 as well as in the drying zone 5. The operation controller 80 is configured to supply the mercury removing agent into the exhaust gas at second supply amount, which is larger than first supply amount at a steady operation, when numerical value of output signal of at least one of the ultraviolet light sensors 105, 106, 107, and 108 exceeds threshold value.

In this embodiment, four ultraviolet light sensors 105, 106, 107, and 108 are provided, while in one embodiment, five or more ultraviolet light sensors may be provided. Further, a plurality of ultraviolet light sensors may be disposed on both side walls of the stoker-type incinerator 1.

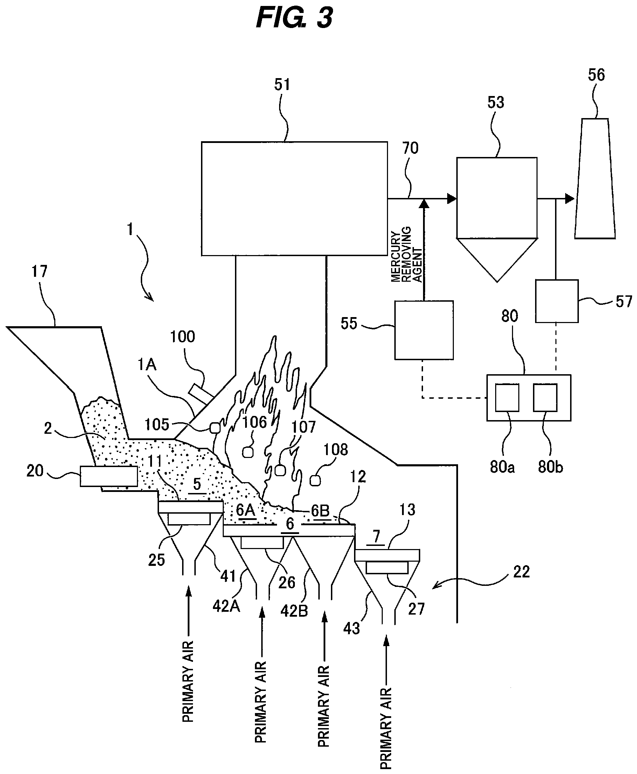

As shown in FIG. 3, the ultraviolet light sensor 100 shown in FIG. 1 and the ultraviolet light sensors 105, 106, 107, and 108 shown in FIG. 2 may be combined. According to the embodiment shown in FIG. 3, the ultraviolet light sensor 100 can detect a total amount of the ultraviolet rays in the drying zone 5 and the combustion zone 6, and the ultraviolet light sensors 105, 106, 107, and 108 can detect the amounts of the ultraviolet rays (i.e., the concentration of the mercury) along the moving direction of the waste 2.

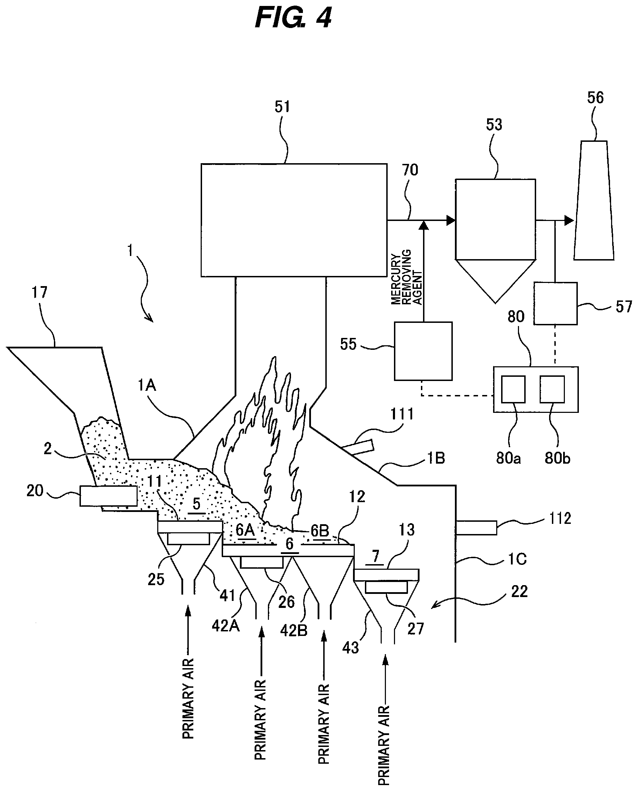

FIG. 4 is a diagram showing yet another embodiment of the incineration system. Configurations and operations of this embodiment, which will not be particularly described, are the same as those of the embodiments shown in FIG. 1, and duplicated descriptions will be omitted. In this embodiment, the incineration system includes an ultraviolet light sensor 111 arranged above the combustion zone 6, and an ultraviolet light sensor 112 arranged downstream of the post-combustion zone 7. The ultraviolet light sensor 111 and the ultraviolet light sensor 112 are rear ultraviolet light sensors configured to detect the concentration of the mercury present in the flame from its rear side.

The ultraviolet light sensor 111 is located above the combustion stoker 12 of the stoker-type incinerator 1 (i.e., above the combustion zone 6), and is fixed to a ceiling wall 1B of the stoker-type incinerator 1. The ceiling wall 1B is provided with a window (not shown) made of quartz glass or the like, so that the ultraviolet light sensor 111 can detect the concentration of the mercury present in the flame in the stoker-type incinerator 1 through the window. The ultraviolet light sensor 112 is fixed to a vertical wall 1C of the stoker-type incinerator 1 located above the ash chute 22. The vertical wall 1C is provided with a window (not shown) made of quartz glass or the like, so that the ultraviolet light sensor 112 can detect the concentration of the mercury present in the flame in the stoker-type incinerator 1 through the window.

The ultraviolet light sensor 111 and the ultraviolet light sensor 112 are oriented in directions that are opposite to the moving direction of the waste 2 in the stoker-type incinerator 1. The ultraviolet light sensor 111 is oriented in a direction from a position above the combustion zone 6 toward the drying zone 5. The ultraviolet light sensor 112 is oriented in a direction from a position behind the post-combustion zone 7 toward the combustion zone 6. The ultraviolet light sensor 111 is provided primarily for detecting the concentration of the mercury present in the flame in the drying zone 5 and the combustion zone 6, and the ultraviolet light sensor 112 is provided primarily for detecting the concentration of the mercury present the flame in the combustion zone 6.

The operation controller 80 is configured to supply the mercury removing agent into the exhaust gas with second supply amount, which is larger than first supply amount at a steady operation, when numerical value of output signal of at least one of the ultraviolet light sensor 111 and the ultraviolet light sensor 112 exceeds threshold value.

The embodiment shown in FIG. 4 may be combined with the embodiment shown in FIG. 1, the embodiment shown in FIG. 2, or the embodiment shown in FIG. 3.

The previous description of embodiments is provided to enable a person skilled in the art to make and use the present invention. Moreover, various modifications to these embodiments will be readily apparent to those skilled in the art, and the generic principles and specific examples defined herein may be applied to other embodiments. Therefore, the present invention is not intended to be limited to the embodiments described herein but is to be accorded the widest scope as defined by limitation of the claims.

### Industrial Applicability

The present invention is applicable to a technique for controlling a supply amount of a mercury adsorbent for removing mercury contained in an exhaust gas discharged from a stoker-type incinerator.

### Reference Signs List

- 1: stoker-type incinerator
- 5: drying zone
- 6: combustion zone
- 6A: first combustion zone
- 6B: second combustion zone
- 7: post-combustion zone
- 11: drying stoker
- 12: combustion stoker
- 13: post-combustion stoker
- 17: hopper
- 20: waste feeding device
- 22: ash chute
- 25: drying-stoker driving device
- 26: combustion-stoker driving device
- 27: post- combustion-stoker driving device
- 41: drying air box
- 42A: first combustion air box
- 42B: second combustion air box
- 43: post-combustion air box
- 51: boiler
- 53: filtration-type dust collector
- 55: supply device
- 56: chimney
- 57: mercury concentration meter
- 70: communication passage
- 80: operation controller
- 80a: memory
- 80b: arithmetic device
- 100: ultraviolet light sensor
- 105, 106, 107, 108: ultraviolet light sensor
- 111: ultraviolet light sensor
- 112: ultraviolet light sensor

## Claims

1. An incineration system comprising:
a stoker-type incinerator having a drying zone configured to dry a waste, a combustion zone configured to burn the dried waste, and a post-combustion zone configured to burn a remaining unburned waste;
at least one ultraviolet light sensor configured to detect concentration of mercury in the stoker-type incinerator;
a supply device configured to supply a mercury removing agent into an exhaust gas discharged from the stoker-type incinerator; and
an operation controller configured to instruct the supply device to control a supply amount of the mercury removing agent based on an output signal of the ultraviolet light sensor.

2. The incineration system according to claim 1, wherein the ultraviolet light sensor is arranged above the drying zone.

3. The incineration system according to claim 1, wherein the at least one ultraviolet light sensor comprises a plurality of ultraviolet light sensors arranged along a moving direction of the waste in the stoker-type incinerator.

4. The incineration system according to claim 3, wherein the plurality of ultraviolet light sensors are fixed to a side wall of the stoker-type incinerator.

5. The incineration system according to claim 4, wherein the plurality of ultraviolet light sensors include at least one upstream ultraviolet light sensor arranged above the drying zone, and at least one downstream ultraviolet light sensor arranged above the combustion zone.

6. The incineration system according to any one of claims 1 to 5, wherein the operation controller is configured to instruct the supply device to increase the supply amount of the mercury removing agent when a numerical value of the output signal of the ultraviolet light sensor exceeds a threshold value.

7. The incineration system according to claim 6, wherein the operation controller is configured to instruct the supply device to supply the mercury removing agent into the exhaust gas with a first supply amount when the numerical value of the output signal of the ultraviolet light sensor is not more than the threshold value, and instruct the supply device to supply the mercury removing agent to the exhaust gas with a second supply amount, which is larger than the first supply amount, when the numerical value of the output signal of the ultraviolet light sensor exceeds the threshold value.

8. The incineration system according to claim 7, further comprising:
a filtration-type dust collector arranged downstream of the stoker-type incinerator; and
a mercury concentration meter arranged downstream of the filtration-type dust collector,
wherein the supply device is configured to continue to supply the mercury removing agent with the second supply amount until a mercury concentration value indicated by the mercury concentration meter becomes equal to or less than a set value.
